# EUROPEAN PATENT APPLICATION

(11) **EP 3 016 042 A1**
(43) Date of publication of application: **04.05.2016**
(21) Application number: 15000627.8
(22) Date of filing: 04.03.2015
(51) Int. Cl.: G06Q 10/06, G06Q 50/30

(54) **Segmented availability cache**

(30) Priority: 03.11.2014 US 201414531325
(71) Applicant: Amadeus S.A.S., 06410 Biot (FR)
(72) Inventor: Charret, Christophe, 06130 Grasse (FR); Butault, Kilian, 06600 Antibes (FR); Lazaar, Jamal, 06160 Antibes (FR); Lataille, Norbert, 06110 Le Cannet (FR)
(74) Representative: Samson & Partner Patentanwälte mbB

(57) **Abstract**

Methods, systems, and computer program products for processing requests for travel objects. A cache stores data for travel objects, where the data is segmented for possible contexts and/or possible geographical identifiers. A request identifying at least one travel object is received at a processing system. The requested travel object has a departure point, an arrival point, and a context. The requested travel object may also be associated with at least one travel solution that has a geographical identifier. Data associated with the at least one requested travel object is determined by querying the cache based on the departure point, arrival point, context, and/or geographical identifier. A reply that indicates an availability for the at least one requested travel object is generated based at least in part on the retrieved data.

## Description

### TECHNICAL FIELD

The invention is generally related to computers and computer software, and in particular to systems, methods, and computer program products for processing requests with a cache structure and generating responses to the requests.

### BACKGROUND

Computer technology is increasingly used in the travel industry to manage, support, book/reserve, and process travel reservations, as well as data associated therewith. Generally, third party reservation agents, such as travel agents, and/or customers (e.g., travelers) often utilize computer based devices/terminals (e.g., client devices) to interface with an availability processing system, such as a Global Distribution System (GDS), to book travel arrangements and/or travel-related services for the customer. When reserving travel-related services using such client devices in communication with such availability processing systems, a travel agent and/or customer may initiate a reservation session between a client device and the availability processing system to book one or more travel inventory items (e.g., a flight ticket, a hotel room accommodation, etc.) corresponding to the travel-related services (e.g., flights, hotels, rail transportation, dining reservations, etc.) for the customer during the reservation session. In turn, the availability processing system may initiate an inventory session with one or more inventory systems that manage inventory for one or more travel merchants and/or travel service providers to determine availability and/or revenue related data.

Consequently, a need exists in the art for improved systems, methods, and computer program products for processing requests with a cache structure and generating responses to the requests, such as availability shopping requests at reservation systems.

### SUMMARY

Embodiments of the invention generally comprise systems, methods, and computer program products for determining flight-date availability at an availability processing system. The availability processing system may include an availability cache that generally stores availability data for a plurality of available flight-dates. The availability data for each flight-date includes availability information for a plurality of possible flight-date contexts, plurality of possible connecting flights, a plurality of possible points of sale, a plurality of possible points of commencement, and/or a plurality of possible origin and destination pairs. Consistent with some embodiments of the invention, an availability shopping request may be received at the availability processing system, where the availability shopping request identifies at least one requested flight-date having a departure point, an arrival point, and a flight-date context. Furthermore, the at least one requested flight-date may be associated with at least one travel solution having an origin and destination pair. Availability data associated with the at least one flight-date may be determined by querying the availability cache based at least in part on the departure point and the arrival point of the at least one requested flight-date and/or the origin and destination pair from the availability data for the plurality of available flight-dates stored by the availability cache. An availability shopping reply that indicates the availability for the at least one requested flight-date may be generated based at least in part on the retrieved availability data, the flight-date context of the at least one requested flight-date, and the origin and destination pair of the at least one travel solution.

### BRIEF DESCRIPTION OF THE SEVERAL VIEWS OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a block diagram of an availability processing system, one or more inventory systems, and one or more client devices consistent with embodiments of the invention.
FIG. 2 is an example block diagram of the availability processing system of FIG. 1.
FIG. 3 is an example block diagram that illustrates example hardware and software components of the availability processing system of FIGS. 1 and 2 and types of data that may be input to and/or output from the availability cache.
FIG. 4 is a block diagram that illustrates an example data hierarchy that may be implemented in the availability cache of FIGS. 1-3.
FIG. 5 is an example flowchart illustrating a sequence of operations that may be performed by the availability processing system of FIGS. 1-3 to determine a flight-date availability consistent with some embodiments of the invention.
FIG. 6 is a block diagram that illustrates an example processing of an availability shopping request by the availability processing system consistent with some embodiments of the invention.
FIG. 7 is an example flowchart illustrating a sequence of operations that may be performed by the availability processing system of FIGS. 1-3 to store availability data based on a polling response for one or more flight-dates consistent with embodiments of the invention.
FIG. 8 is a block diagram that illustrates an example processing of an availability shopping request by the availability processing system of FIGS. 1-3 to generate an availability shopping reply.
FIGS. 9A-9B are block diagrams that illustrate an example processing of a polling response by the availability processing system of FIGS. 1-3 to store updated availability information.
FIGS. 10-12 are block diagrams that illustrate example availability data that may be stored in the availability cache of FIGS. 1-3.
FIGS. 13 and 14 are block diagrams that illustrate example availability data that may be retrieved from the availability cache of FIGS. 1-3.

### DETAILED DESCRIPTION

Embodiments of the invention provide systems, methods, and computer program products for processing requests for travel objects. A processing system may maintain a cache that stores data for a plurality of travel objects, where data for each travel object may be segmented based on one or more possible contexts and/or one or more possible geographical identifiers. A request identifying at least one travel object may be received at the processing system, where the requested travel object may comprise a departure point, an arrival point, and a context. The processing system may query the cache to determine data associated with the at least one requested travel object. The determined data may comprise one or more segmentations of data stored in the cache associated with the at least one travel object. The processing system may analyze the data to determine one or more segmentations of the data that are relevant to the at least one requested travel object based on the departure point, arrival point, and/or context of the at least one requested travel object. A reply indicating an availability for the at least one requested travel object is generated based at least in part on the one or more relevant segmentations. In some embodiments, the cache may be an availability cache, a travel object may correspond to a flight-date, a geographical identifier may correspond to an origin and destination pair, a context may correspond to a flight-date context, data stored for each flight-date may comprise availability information that is segmented based at least in part on possible flight-date contexts and/or possible origin and destination pairs, a request may correspond to an availability shopping request, and a processing system may correspond to an availability processing system.

Embodiments of the invention provide systems, methods, and computer program products for determining availability for a requested flight-date based at least in part on a flight-date context and an origin and destination of an associated travel solution. Furthermore, embodiments of the invention determine the availability for the requested flight-date responsive to receiving an availability shopping request at an availability processing system. The availability processing system may determine the availability for the requested flight-date notably from availability data stored in an availability cache of the availability processing system. Therefore, embodiments of the invention facilitate determining availability for availability shopping requests without querying an inventory system of a travel merchant (e.g., an airline). By processing availability shopping requests at the availability processing system, embodiments of the invention reduce processing and communication resource utilization of inventory systems.

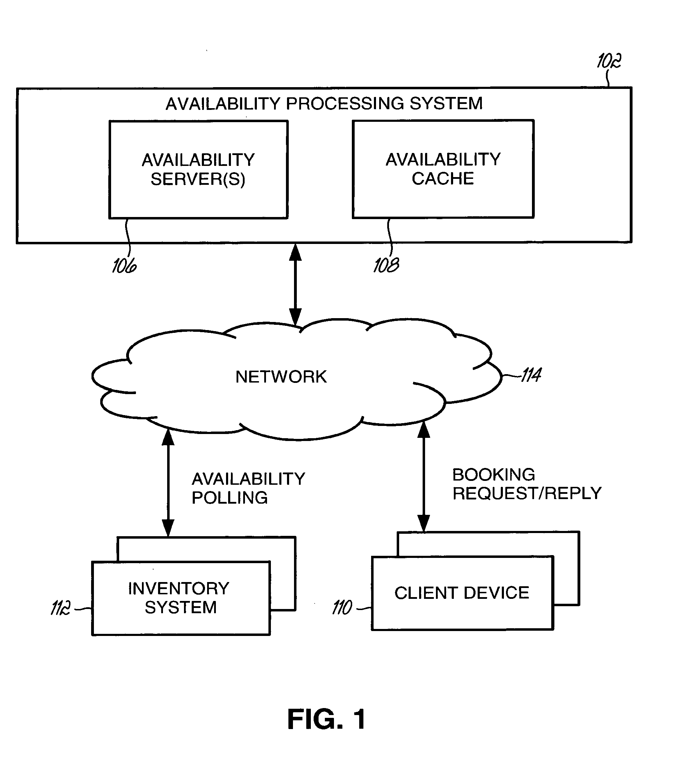

Turning now to the figures and particularly to FIG. 1, this figure provides a block diagram illustrating the one or more devices and/or systems consistent with embodiments of the invention. As shown in FIG. 1, an availability processing system 102 may be implemented as one or more servers. Generally, the availability processing system 102 may comprise at least one reservation server 104, at least one availability server 106, and an availability cache 108. The one or more reservation servers 104, availability servers 106, and the availability cache 108 may generally comprise one or more data processing systems that include at least one hardware based processor and at least one memory. In general, each reservation server 104 and/or availability server 106 may be configured to process availability shopping queries as well as processing reservation and/or booking of travel solutions responsive to requests received from client devices 110. The availability processing system 102 may be configured to process an availability shopping request for at least one requested flight-date and generate an availability shopping reply for the at least one requested flight-date from availability data stored in the availability cache 108 based at least in part on a context of the requested flight date and/or an origin and destination of a travel solution associated with the requested flight-date. Consistent with embodiments of the invention, use of availability data stored in the availability cache in generating availability shopping replies may reduce query/request traffic communicated to inventory systems 112 to thereby increase processing and communication bandwidth available at the inventory systems 112 for booking and reservation communications.

As shown, the availability processing system 102 may receive availability shopping queries from one or more client devices 110 and the availability processing system 102 may communicate an availability shopping replye to a requesting client device 110 in response. The availability processing system 102 may determine availability of one or more travel inventory items identified in the booking request by sending an availability request to one or more associated inventory systems 112. However, if the availability processing system 102 receives an availability shopping request, the availability processing system may instead determine availability for one or more travel inventory items of the availability shopping request based on availability data stored at the availability cache 108. The availability processing system 102 may generate an availability shopping reply that indicates availability for flight-dates identified in an associated availability shopping request. Generally, the client devices may be a personal computing device, tablet computer, thin client terminal, smart phone and/or other such computing device. In addition, the availability processing system 102 may communicate availability polling requests to one or more inventory systems 112 and receive availability polling responses including availability data from the one or more inventory systems 112, where the availability polling data of the availability polling responses may be stored in the availability cache 108. Generally, the one or more client devices 110, the availability processing system 102, the one or more reservation servers 104, the one or more availability servers 106, and/or the availability cache 108 may be connected to and communicate over a communication network 114, such as the Internet, a local area network (LAN), a wide area network (WAN), a cellular voice/data network, one or more high speed bus connections, and/or other such types of communication networks. Furthermore, as will be appreciated, in some embodiments the availability processing system 102 and inventory system 112 may be components of a GDS.

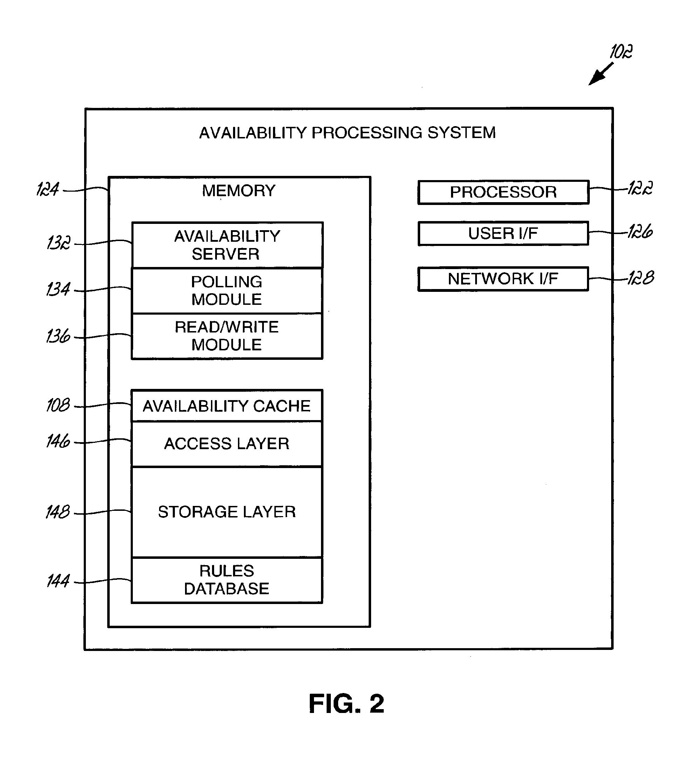

FIG. 2 provides a block diagram that illustrates components of the availability processing system 102. The availability processing system 102 includes at least one processor 122 including at least one hardware-based microprocessor and a memory 124 coupled to the at least one processor 122. The memory 124 may represent the random access memory (RAM) devices comprising the main storage of the availability cache 108, as well as any supplemental levels of memory, e.g., cache memories, non-volatile or backup memories (e.g., programmable or flash memories), read-only memories, mass storage devices, etc. In addition, memory 124 may be considered to include memory storage physically located elsewhere in the availability processing system 102, e.g., any cache memory in a microprocessor, as well as any storage capacity used as a virtual memory, e.g., as stored on a mass storage device or on another computer coupled to the availability processing system 102.

For interface with a user or operator, the availability processing system 102 may include a user interface 126 incorporating one or more user input/output devices, e.g., a keyboard, a pointing device, a display, a printer, etc. Otherwise, data may be communicated to and from another computer or terminal (e.g., a client device 110, the reservation server 104, the availability server 106, an inventory system 112) over a network interface 128 coupled to the communication network 114. The availability processing system 102 also may be connected to and/or in communication with one or more mass storage devices, which may be, for example, internal hard disk storage devices, external hard disk storage devices, external databases, storage area network devices, etc.

The availability processing system 102 may execute or otherwise rely upon various computer software applications, components, programs, objects, modules, engines, data structures, etc., including for example, the availability server 106 that may include a polling module 134, a read/write module 136, and/or other such components that may be configured to cause the availability processing system 102 to perform operations consistent with some embodiments of the invention. In general, the availability server 106 may be configured to receive an availability shopping request and generate an availability shopping reply for the availability shopping request. The polling module 134 may be configured to communicate polling requests to one or more inventory systems 112 and process availability information for one or more flight-dates received in availability polling responses from polled inventory systems 112. The read/write module 136 may be configured to retrieve availability data and/or store availability data at one or more memory locations associated with the availability cache 108.

Moreover, various applications, components, programs, objects, modules, engines etc. may also execute on one or more processors in another computer coupled to the availability processing system 102 via the communication network 114, e.g., in a distributed or client-server computing environment, whereby the processing required to implement the functions of a computer program may be allocated to multiple computers over a network. For example, some of the functionality described herein as being incorporated into an availability processing system 102, reservation server 104, availability server 106, and/or availability cache 108 and/or included modules/engines may be implemented in one or more servers. Generally, the modules/engines 132-136 may cause the processor 122 of the availability processing system 102 to perform operations consistent with embodiments of the invention.

The memory 124 of the availability processing system 102 may generally store one or more storage structures/databases including, for example, the availability cache 108 and a rules database 144. The databases/storage structures 108, 144 may comprise data and supporting data structures that store and organize the data. In particular, the storage structures/databases 108, 144 may be arranged with any database organization and/or structure including, but not limited to, a relational database, a hierarchical database, a network database, a cache memory indexing scheme, and/or combinations thereof. A database management system in the form of a computer software application executing as instructions on a processing unit of the availability processing system 102 may be used to access the information or data stored in records of the structures/databases 108, 144 in response to a query, where a query may be dynamically determined and executed one or more modules/engines 132-136.

In particular, the availability cache 108 may comprise an access layer 146 and a storage layer 148. The storage layer 148 may store information corresponding to travel inventory items. Generally, the storage layer 148 may store availability data for a plurality of available flight-dates, where the availability data for each available flight-date may include availability information that is segmented for a plurality of possible flight-date contexts, a plurality of possible connecting flight-dates, and/or a plurality of possible origin and destination pairs. In general, availability information may comprise a list of booking classes and designators (e.g., A, B, C, etc.), availability posting levels (e.g., 1, 2, 3, etc.). The availability information stored for each possible flight-date context and/or possible origin and destination pair may be referred to as a segmentation. As will be appreciated, embodiments of the invention maintain the availability cache such that up to date availability information for one or more segmentations may be accessible by the availability processing system for generating availability shopping replies. As will be further described herein, maintaining the availability cache 108 may generally comprise updating availability information for one or more segmentations as well as maintaining the data structure facilitated by the availability cache and the segmentation of the availability information stored therein. The read/write module 136 may cause availability data to be stored in and/or retrieved from the storage layer 148 to the access layer 146, where the access layer 146 may be used to store availability data retrieved from the storage layer 148 and/or availability data to be stored in the storage layer 148. The rules database 144 may store one or more storage rules that may be used to control storage of availability information in the availability cache 108 and/or retrieval of availability information from the availability cache 108. Moreover, the rules database 144 may store selection rules that may be used to determine a storage location for storing availability information if the availability cache 108 is organized in a distributed processing architecture.

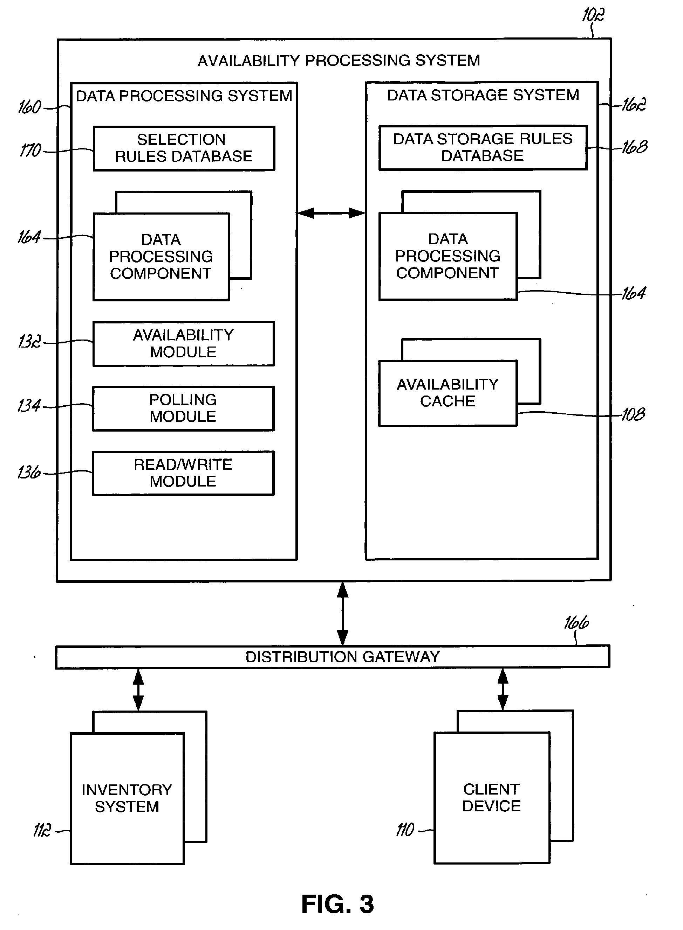

FIG. 3 provides a block diagram that illustrates some software and hardware components of an availability processing system 102 and types of data that may be communicated therebetween consistent with some embodiments of the invention. As shown, the availability processing system 102 may comprise a data processing system 160 and a data storage system 162 both comprising one or more data processing components 164. Generally, the data processing components 164 may comprise one or more processors and at least one memory, and the data processing components 164 may be configured to execute program code to cause the data processing components 164 to perform one or more operations consistent with embodiments of the invention. As shown, the availability processing system 102 may receive data from one or more inventory systems 112 and/or one or more client devices 110 through a distribution gateway 166. Generally, the distribution gateway 166 may be connected to the communication network 114, and the distribution gateway 166 may route data to be sent and received data. In this embodiment, the data storage system 162 comprises a distributed availability cache 108, such that availability data of available flight-dates may be stored across one or more distributed instances of the availability cache 108. Therefore, the data storage system 162 is connected to and/or has access to a data storage rules database 168, such that availability data may retrieved and/or stored data in a particular instance of the availability cache 108 based at least in part on one or more data storage rules stored in the data storage rules database.

Data storage rules may generally define various segmentations and/or instances of the availability cache 108 such that availability data for available flight-dates may be stored and/or retrieved from the availability cache 108 based at least in part on possible flight-date contexts, data storage rules, possible connecting flight-dates, possible points of sale/commencement, and/or possible origin and destination pairs. The data processing system 160 may comprise and/or be configured to access a selection rules database 170, where during execution of the one or more modules 132-136 data may be retrieved from and/or stored in a particular instance of the availability cache 108 based at least in part on one or more selection rules stored in the selection rules database 170. Therefore, in some embodiments of the invention, the availability processing system may maintain the availability cache 108 in a distributed manner based on one or more selection rules and/or data storage rules.

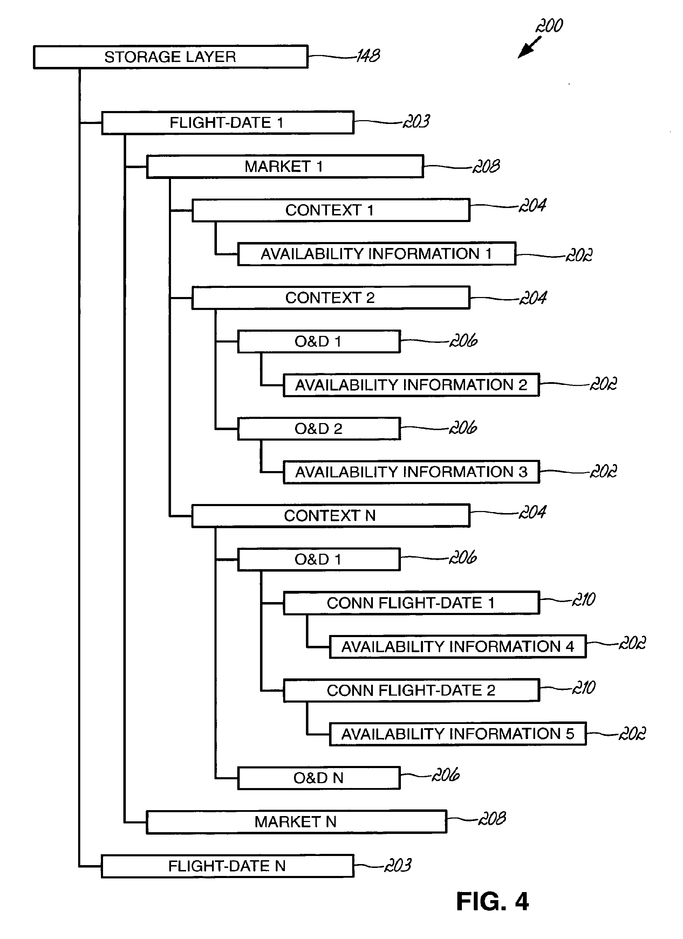

FIG. 4 provides a block diagram that illustrates an example data storage structure organization 200 that may be implemented in an embodiment of the invention to store availability information 202 for flight-dates 203 based at least in part on a possible flight-date context 204 and/or a possible origin and destination pair 206. Furthermore, as shown, availability information 202 may be stored for the flight-dates 203 based at least in part on a market 208 (that may be determined according to one or more storage rules, point of sale, and/or point of commencement) and/or a possible connecting flight-date 210. Generally, the availability information 202 for possible markets 208, possible flight-date contexts 204, possible origin and destination pairs 206, and/or possible connecting flight-dates for a particular flight-date 203 may be referred to as availability data. Furthermore, the various possible availability information 202 stored for the various possible flight-date contexts 204, possible origin and destination pairs 206, possible connecting flight-dates 210, and/or possible markets 208 may be referred to as a segmentation. As an example, 'AVAILABILITY INFORMATION 1' corresponds to a 'CONTEXT 1' segmentation of the availability data 200 of 'FLIGHT-DATE 1' for 'MARKET 1', and 'AVAILABILITY INFORMATION 4' corresponds to a 'CONTEXT N' for 'MARKET 1', 'O&D 1', and 'CONN FLIGHT-DATE 1' segmentation of the availability data 200 of 'FLIGHT-DATE 1'.

Further segmentation of availability data may be based at least in part on a point of commencement and/or a point of sale. A point of sale (POS) generally identifies a geographical location from which an availability shopping request originated. For example, a point of sale may identify a city and/or country associated with a travel agency and/or user device that generated the availability shopping request. A point of sale may be determined from the availability shopping request, where the availability shopping request may include a city and/or country identifier, an International Air Transport Association (IATA) code associated with a reservation agent, and/or other such data that may be used to determine a point of sale associated with the availability shopping request. A point of commencement (POC) generally refers to a geographical location at which a first travel segment of a journey occurs. For example, if a journey includes a first flight from city A to city B and a second flight from city B to city C, city A would be the point of commencement. Hence in some embodiments of the invention, the availability data may be further segmented based on a point of sale and/or a point of commencement, such that different availability information may be stored for different points of sale and/or points of commencement. Therefore, in some embodiments, retrieving the availability data for a requested flight-date may cause a processor to retrieve a plurality of possible availabilities stored as availability information based on possible markets, possible flight-date contexts, possible origin and destination pairs, possible points of sale, possible points of commencement, and/or possible connecting flight-dates.

Furthermore, as will be appreciated, consistent with embodiments of the invention, the availability processing system may determine availability data associated with a received availability shopping request by querying the availability cache 108. In general, the availability processing system may generate a query based on the availability shopping request, where the query may identify a departure point, an arrival point, and/or other such information that may be used to determine one or more segmentations of availability data stored in the availability cache 108 that are relevant to the availability shopping request. Similarly, when updating availability data stored in the availability cache 108 with updated availability information received from an inventory system, the availability processing system 102 determines one or more segmentations of the availability data stored in the cache to update.

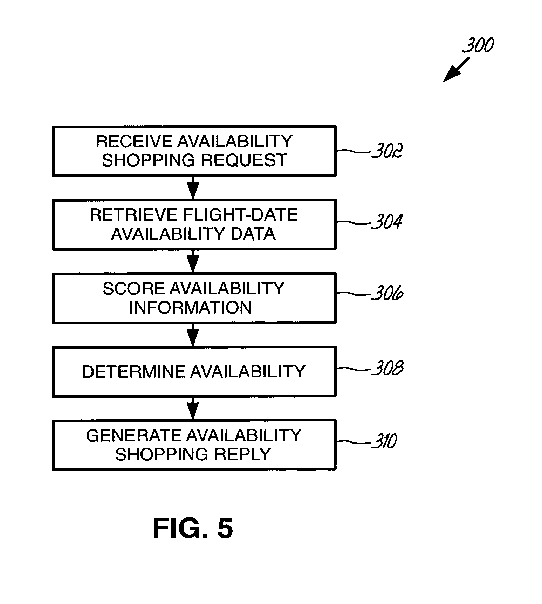

Turning now to FIG. 5, this figure provides a flowchart 300 that illustrates a sequence of operations that may be performed by the availability processing system 102 consistent with some embodiments of the invention to generate an availability shopping reply. The availability processing system 102 may receive an availability shopping request that identifies at least one requested flight-date (block 302). Generally, the requested flight-date will have a departure point, an arrival point, and a flight-date context. A flight-date context generally corresponds to a direct flight-date context, an online flight-date context, and/or an interline flight-date context. Furthermore, the requested flight-date may be associated with a travel solution that has an origin and destination. In some embodiments, a point of sale and/or point of commencement may be associated with and/or determined from the availability shopping request Therefore, for a flight-date having a direct flight-date context, the departure point and arrival point of the flight-date may correspond to the origin and destination of the travel solution. For a flight date having an online flight-date context, the requested flight-date may be associated with at least one other connecting flight-date of the same travel provider (i.e., airline) such that the requested flight-date and the at least one other flight-date correspond to the origin and destination of the associated travel solution. Similarly, for a flight-date having an interline flight-date context, the requested flight date may be associated with at least one other flight-date of a different travel provider (e.g., a partner airline), such that the requested flight-date and the at least one other connecting flight-date correspond to the origin and destination of the associated travel solution.

Availability data for the at least one requested flight-date may be retrieved from the availability cache 108 based at least in part on the departure point and the arrival point of the at least one requested flight-date (block 304). In particular, availability data may be retrieved from the storage layer 148 to the access layer 146, such that the availability module 132 and read/write module 136 executing on the availability processing system may access the retrieved availability data stored in the access layer 146. For example, if the requested flight-date is a flight by Airline A on December 25, 2014 from Atlanta (ATL) to John F. Kennedy Airport in New York City (JFK), the availability processing system 102 retrieves availability data for the flight-date offered by Airline A on December 25, 2014 from ATL to JFK. As discussed, the retrieved availability data may include availability information for a plurality of possible flight-date contexts, a plurality of possible points of sale/commencement, a plurality of possible connecting flight-dates, and/or a plurality of possible origin and destination pairs. The availability information for each of the plurality of possible flight-date contexts, the plurality of possible connecting flight-dates, the plurality of possible points of sale/commencement, and/or the plurality of possible origin and destination pairs may be scored (block 306), such that the relevance of the retrieved availability information for each possible segmentation to the availability shopping request is evaluated based at least in part on the flight-date context, the connecting flight-date, the point of sale, the point of commencement, and/or the origin and destination associated with the at least one requested flight-date.

For example, if the availability data included availability information for a direct flight-date context, an online flight-date context, and an interline flight-date context, and the flight-date context for the flight-date identified in the availability shopping request was direct, the availability information for the direct flight-date context would be scored the highest, thereby indicating that it corresponds to the availability shopping request. The availability processing system102 determines the availability for the at least one requested flight-date based upon the scored availability information (block 308), and the availability processing system 102 generates an availability shopping reply (block 310) that indicates the availability for the at least one requested flight-date.

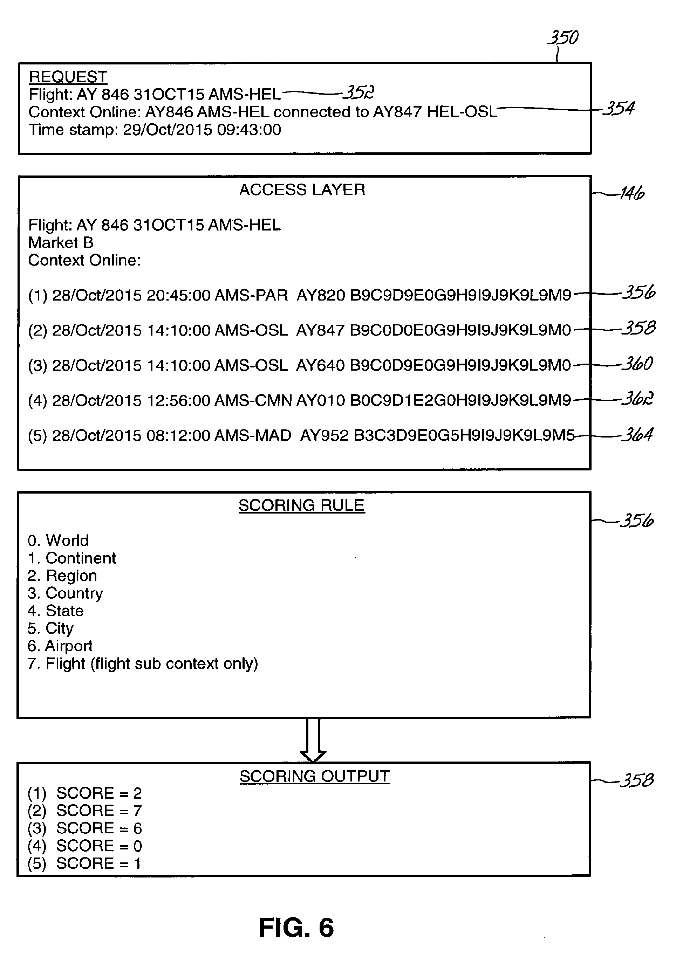

FIG. 6 provides a block diagram that illustrates an example scoring of availability information for a plurality of origin and destination pairs and a plurality of connecting flight-dates. As shown, an availability shopping request 350 may be received for a flight-date 'AY846 310CT15 AMS-HEL' 352. The availability shopping request 350 indicates that the flight-date context is online and that the requested flight-date segment 352 is connected to a second flight-date segment 'AY847 HEL-OSL' 354. In combination with the second flight-date segment 354, the requested flight-date segment is therefore associated with the origin and destination pair 'AMS-OSL' - i.e., the departure point of the requested flight-date segment 352 and the arrival point of the second flight-date segment 354.

In this example, the availability processing system 102 has retrieved availability data for the requested flight-date 352 and the flight-date context (i.e., online) of the requested flight-date 352 into the access layer 146 of the availability cache 108: a first availability information 356 that is associated with the origin and destination pair 'AMS-PAR' and the connecting flight-date 'AY820'; a second availability information 358 that is associated with the origin and destination pair 'AMS-OSL' and the connecting flight-date 'AY847'; a third availability information 360 that is associated with the origin and destination pair 'AMS-OSL' and the connecting flight-date 'AY640'; a fourth availability information 362 that is associated with the origin and destination pair 'AMS-CMN' and the connecting flight-date 'AY010'; and a fifth availability information that 364 is associated with the origin and destination pair 'AMS-MAD' and the connecting flight-date 'AY956'. Based on an example scoring rule 356 that may be used to evaluate the availability information for each possible origin and destination pair and possible connecting flight-date, the availability processing system 102 may score the availability information. Since the requested flight-date 352 is associated with the 'AMS-OSL' origin and destination pair and the connecting flight-date is 'AY847' the availability cache scores the second availability information 358 the highest. While in this example, the availability data retrieved corresponds to an online flight-date context, consistent with some embodiments of the invention, other flight-date contexts may also be retrieved.

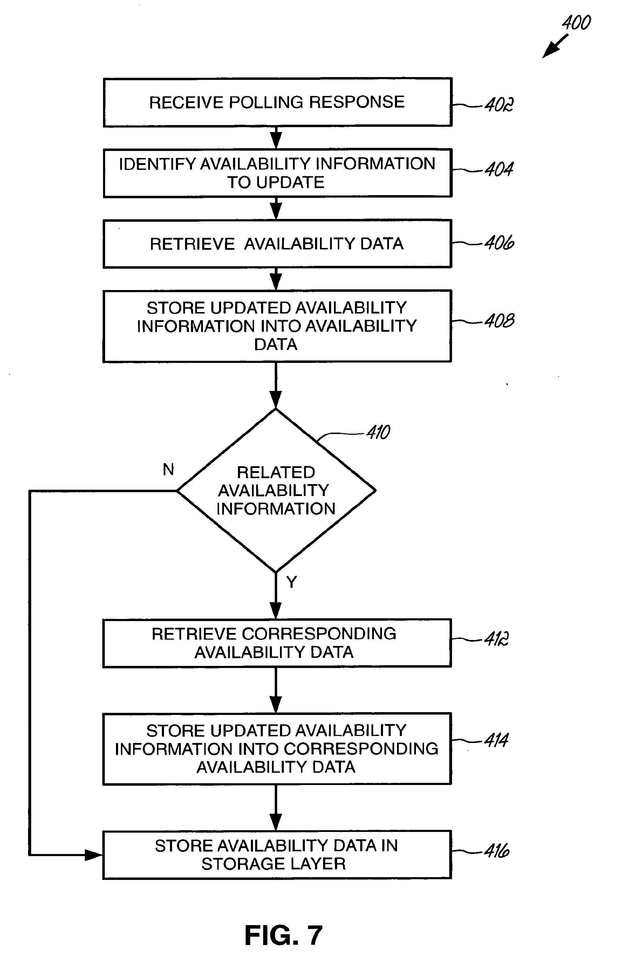

Turning now to FIG. 7, this figure provides a flowchart 400 that illustrates a sequence of operations that may be performed by the availability processing system 102 consistent with some embodiments of the invention to store and/or update availability data stored in the availability cache 108. The availability processing system 102 receives a polling response from one or more inventory systems 112 of one or more travel providers (i.e., airlines) (block 402). Generally, the polling response may identify one or more flight-dates for which updated availability information is included in the polling response. The availability processing system 102 identifies the one or more flight-dates and availability data to update in the availability cache 108 (block 404). Consistent with some embodiments of the invention, the availability processing system 102 loads data into the access layer 146 that identifies one or more available flight-dates for which availability data is to be updated. Based on the availability data to be updated, corresponding availability data from the storage layer 148 is retrieved into the access layer 146 (block 406), and the updated availability information is stored into the availability data in the access layer (block 408). As discussed, the availability data for a flight-date may comprise availability information for possible flight-date contexts, possible points of sale/commencement, possible connecting flight dates, and/or possible origin and destination pairs. A polling response may include availability information for some or all of the possible flight-date contexts, possible points of sale/commencement, possible connecting flight dates, and/or possible origin and destination pairs. Hence, the updated availability information may be stored in the availability data, and availability information for which updated availability information was not received may remain unchanged.

In some embodiments of the invention, cache chain logic may be implemented such that availability information received for a particular segmentation (i.e., a market, an origin and destination, a flight-date context, point of sale/commencement, and/or a connecting flight-date) may be stored in another segmentation based at least in part on the cache chain logic and one or more data storage rules. In these embodiments, the availability processing system 102 may determine whether any other availability information of any other segmentation may be updated with the updated availability information of the particular segmentation (block 410). If any other segmentation may be updated according to the cache chain logic and the one or more data rules ("Y" branch of block 410), the availability data corresponding to the related availability information is retrieved to the access layer 146 (block 412), and the updated availability information is stored into the availability data corresponding to the related availability information (block 414). Once the availability information has been updated in the access layer 146 ("N" branch of block 410 or from block 414), the availability cache may store the availability data that includes the updated availability information is stored in the storage layer 148 of the availability cache 108 (block 416).

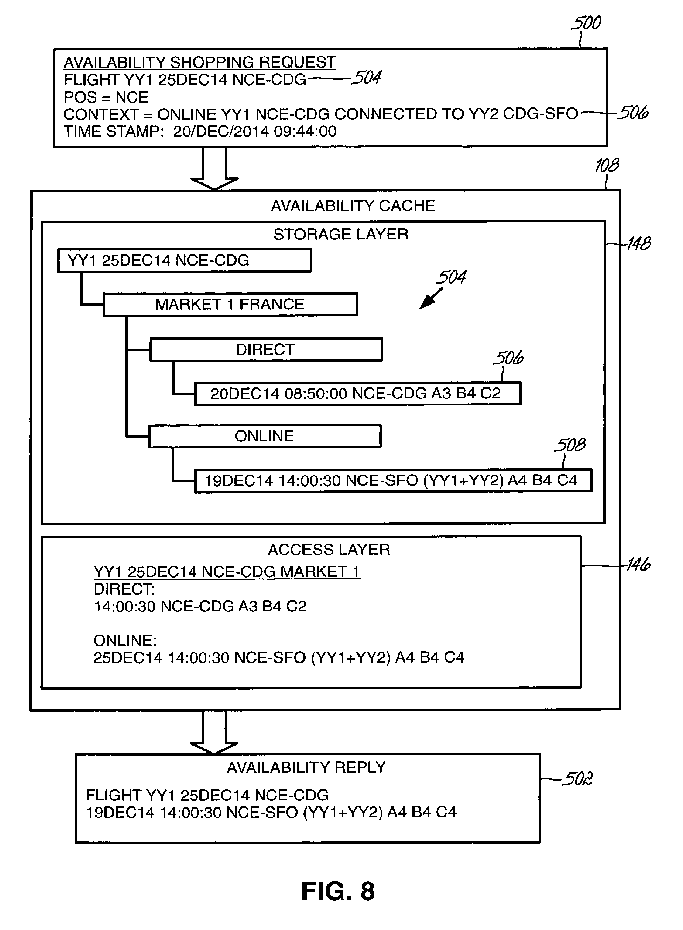

FIG. 8 provides a block diagram that illustrates an example processing of an availability shopping request 500 and generation of an availability shopping reply 502. As shown, the availability shopping request 500 identifies the requested flight-date 'YY001 25DEC14 NCE-CDG' 504 and indicates that the point of sale (POS) is Nice, France (NCE), the flight-date context is online, and that the requested flight-date is connected to a second flight-date 'YY002 CDG-SFO' 506, such that the origin and destination pair associated with the requested flight-date 504 is 'NCE-SFO'. Availability data 504 that includes availability information for a direct flight-date context 506 and availability information for an online flight-date context 508 are retrieved from the storage layer 148 to the access layer 146. Based on the flight-date context and the origin and destination pair, the availability processing system 102 may generate the availability shopping reply 502 that indicates the availability for the requested flight date (i.e., '19DEC14 14:00:30 NCE-SFO (YY1+YY2) A4 B4 C4'), where the '19DEC14 14:00:30 indicates a time stamp for when the availability information was last updated with information received in a polling response from an inventory system of the airline.

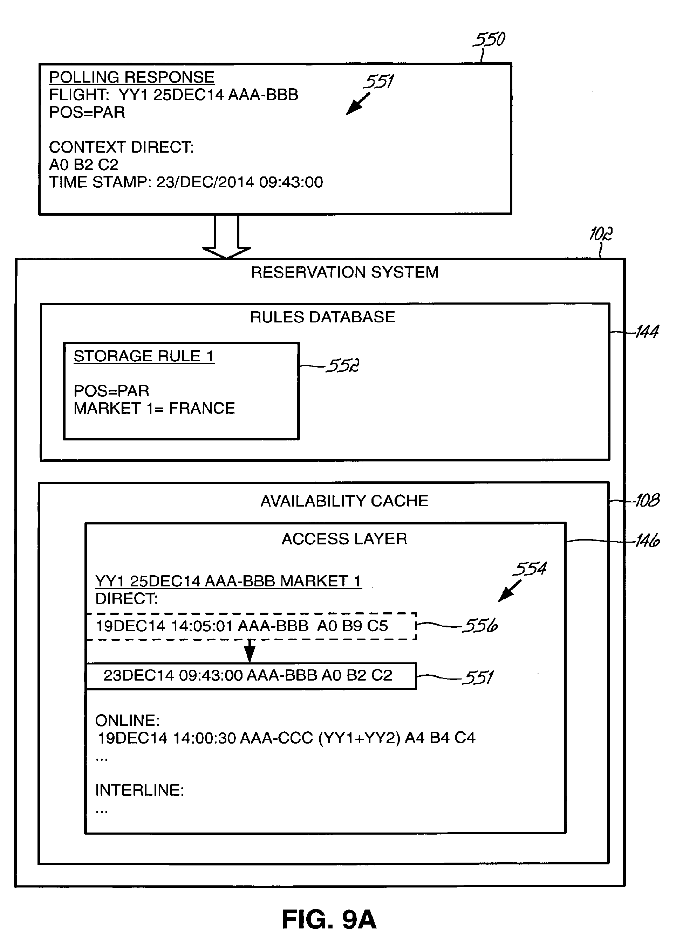

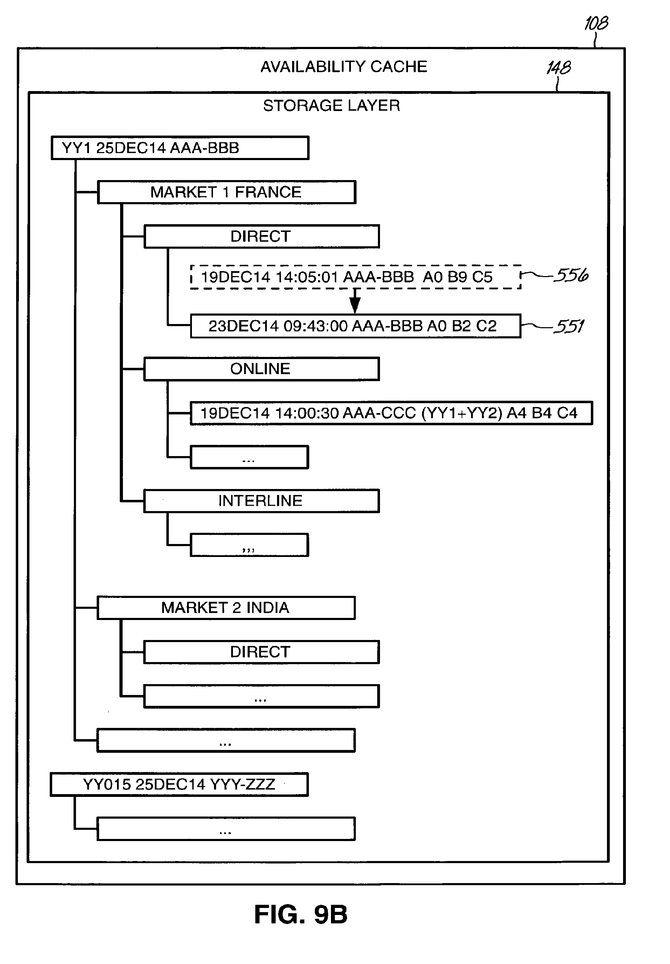

FIGS. 9A and 9B provide block diagrams that illustrate an example processing of a polling response 550 and storage of updated availability information 551 in the availability cache 108. As shown in FIG. 9A, the polling response 550 is received at the availability processing system 102. In general, the availability processing system 102 may process polling responses as received, or the availability processing system 102 may wait a defined amount of time before processing received polling responses (such that more than one polling response may be processed concurrently), and/or the availability processing system 102 may wait to receive a defined quantity of polling responses before processing the polling responses (such that more than one polling response may be processed concurrently). Based on storage rules 552 of the rules database 144, the availability processing system 102 determines a market for the updated availability information of the polling response 550 based on the point of sale (POS) of the polling response 550. In other embodiments, the market may be determined based on a point of commencement (POC).

Availability data 554 associated with the updated availability information 551 is retrieved to the access layer 146 from the storage layer 148. In this example, availability data for the flight date 'YY1 25DEC14 AAA-BBB' for 'MARKET 1' is retrieved. As shown, the updated availability information 551 is stored in the retrieved availability data 554 by replacing the existing availability information 556 that corresponds to the updated availability information 551 with the updated availability information 551 to thereby update the availability data 554. In this example, the updated availability information 551 included updated availability 'A0 B2 C2' for a direct flight-date context of the flight-date 'YY1 25DEC14 AAA-BBB' for 'MARKET 1', where the updated availability information is time stamped with '23/DEC/2014 09:43:00'. The existing availability information 556 associated with the updated availability information 551 is the availability 'A0 B9 C5' for the flight-date that is time stamped '19DEC14 14:05:01', which indicates that the existing availability information 556 is older than the updated availability information 551 (which is generally the case for availability information received from polling responses). As shown in FIG. 9B, in this example, the updated availability data 554 is stored in the storage layer 148 from the access layer 146.

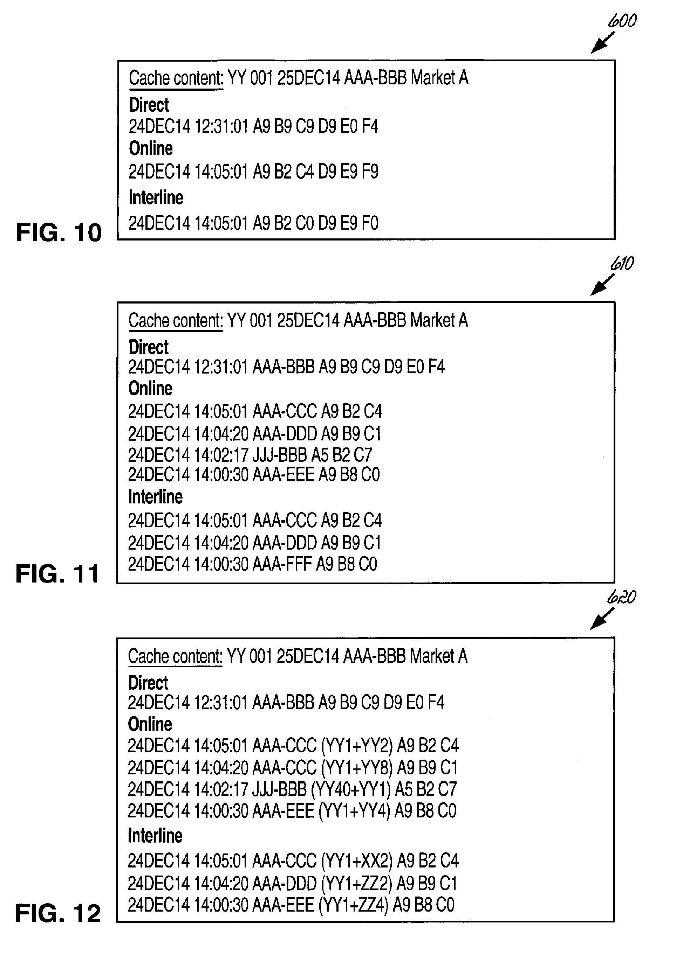

FIGS. 10-12 provide block diagrams that illustrate example availability data that may be stored in the availability cache 108. FIG. 10 provides an example of availability data 600 for a flight-date 'YY001 25DEC14 AAA-BBB' for 'MARKET A'. In this example, availability information for a direct flight-date context, an online flight-date context, and an interline flight-date context are stored for the flight-date. FIG. 11 provides an example of availability data 610 for a flight-date 'YY001 25DEC14 AAA-BBB' for 'MARKET A' that stores availability information for a direct flight-date context, an online flight-date context, and an interline flight-date context. In addition, for the online flight-date context and the interline flight-date context, availability information is further stored based on an origin and destination pair. FIG. 12 provides an example of availability data 620 for a flight-date 'YY001 25DEC14 AAA-BBB' for 'MARKET A' that stores availability information a direct flight-date context, an online flight-date context, and an interline flight-date context.

For the online and interline flight-date context, availability information is further stored based on an origin and destination pair and a connecting flight-date. As may be generally seen in FIGS. 10-12, embodiments of the invention may store classes, which may generally be represented by a letter 'A' to 'Z' and posting information, which may generally be represented by an alphanumeric value 1-9 and 'A' to 'Z'.

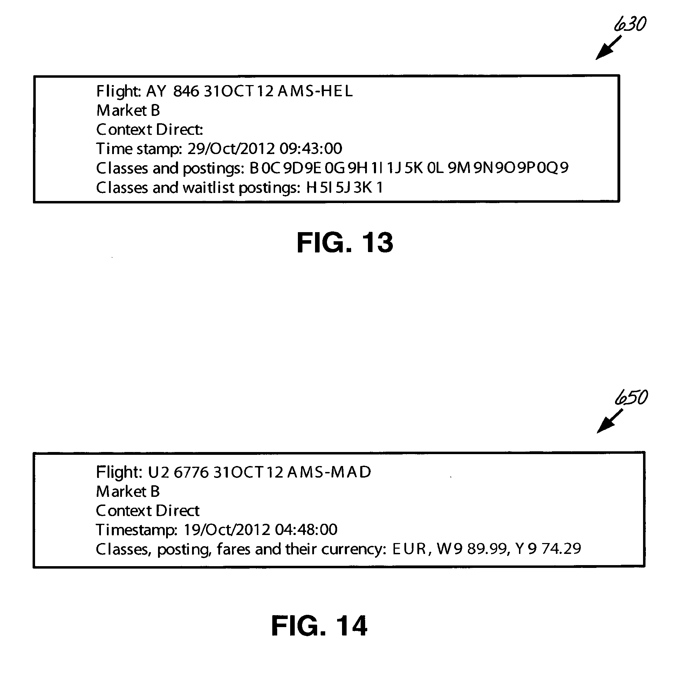

FIGS. 13 and 14 provide block diagrams that illustrate example availability data that may be stored in the availability cache 108. In FIG. 13, the example availability data 630 includes waitlist posting information, where the waitlist posting information may include one or more classes ('A' to 'Z') and waitlist posting information (alphanumeric 1-9 and 'A' to 'Z'). In FIG. 14, the availability data 650 includes fare/currency information. In this example, each class may be stored with posting information, fares, and currency.

Additional types of information may be stored in the availability cache 108 to facilitate consistent and accurate availability determinations based on the availability data stored therein. For example, flag watchers may be implemented in the cache storage to monitor the evolution of specific events. Each flag watcher may be associated to a timer, and monitoring availability data in the cache storage may be based at least in part on the timer, the flag watcher and a flag timestamp associated with availability data. In these embodiments, once an event or an action monitored by the flag watcher occurs a notification may be sent or a process may be triggered. For example, a flag watcher for the availability cache 108 may be configured to monitor changes in terms of availability posting. In response to a posting change, a notification may be sent to another component of the availability processing system 102 such that travel recommendations and/or travel solutions based on such a posting affected by the posting change may be reevaluated. As another example, the availability cache 108 may include an error flag that is triggered in response to receiving an error code in a polling response and/or inventory session. For example, an error code may indicate that a flight-date was cancelled. In response to receiving an error code indicating cancellation of a particular flight-date, the availability data for the particular flight-date may be cleared and the error flag may be stored in place of the cleared availability data. The error flag may be associated with a timestamp and timer, such that the error flag may be cleared after a defined time limit.

Generally, the architecture of the availability cache 108 comprising two levels of storage - the access layer 146 and the storage layer 148 facilitates quick retrieval of availability data (from the access layer 146) and persistency of availability data (through use of the storage layer 148). Counters may be implemented in the availability cache 108 such that consistency of stored availability data may be determined between the access layer 146 and the storage layer 148. With regard to the storage layer 148, a counter may be implemented to score a number of updates of availability data for a given flight-date. Similarly, a counter may be implemented in the access layer 146 and/or storage layer 148 to track availability data changes from received polling responses, such that availability data stored in the access layer 146 and the storage layer 148 may be compared to determine whether availability data from a polling response has been consistently stored in the layers 146, 148 of the availability cache 108. Moreover, as should be appreciated, while the availability cache 108, access layer 146, and/or storage layer 148 have been described in some instances as singular components, embodiments of the invention are not so limited. In general, the availability cache 108, access layer 146, and/or storage layer 148 may be implemented in a distributed computing platform such that instances and/or portions of the availability cache 108, access layer 146, and/or storage layer 148 may generally be distributed across a plurality of storage components, such as a plurality of storage components of a plurality of computing servers connected via one or more communication networks.

Therefore, embodiments of the invention may provide improvements to data processing systems for processing availability shopping requests for travel services. As will be appreciated, embodiments of the invention may reduce availability queries sent to inventory systems and reduce the processing thereof, thereby increasing computing resource availability of inventory systems for processing booking/reservation requests. Moreover, the structure and performance of the availability cache as described herein may increase granularity of availability information for availability shopping requests while improving response time for availability shopping requests. Consequently, embodiments of the invention provide improvements in the data processing systems of travel service reservation and inventory management through implementation of the systems and structures described herein. In particular, the availability cache and/or availability processing system described herein may improve response time for availability shopping requests and reduce computing resource utilization at inventory systems for processing availability shopping requests.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of', or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method for determining availability for at least one requested flight-date at an availability processing system, the method comprising:
maintaining, at the availability processing system, an availability cache that stores availability data for a plurality of flight-dates, and the availability data for each flight-date of the plurality includes availability information that is segmented for a plurality of possible flight-date contexts and a plurality of possible origin and destination pairs;
receiving an availability shopping request that identifies the at least one requested flight-date having a departure point, an arrival point, and a flight-date context, and the at least one requested flight-date being associated with at least one travel solution having an origin and destination pair;
querying the availability cache, with at least one processor of the availability processing system, to determine availability data associated with the at least one requested flight-date based at least in part on the departure point and the arrival point of the at least one requested flight-date, the determined availability data including the availability information for the plurality of possible flight-date contexts and the plurality of possible origin and destination pairs associated with the at least one requested flight-date; and
generating, with the at least one processor, an availability shopping reply that indicates the availability for the at least one requested flight-date based at least in part on the availability data associated with the at least one requested flight-date, the flight-date context of the requested flight-date, and the origin and destination pair of the at least one travel solution.

2. The method of claim 1, wherein the plurality of possible flight-date contexts associated with the at least one requested flight-date comprises a direct flight-date context, an online flight-date context, and an interline flight-date context.

3. The method of claim 1 or claim 2, wherein the availability data for each flight-date includes availability information for a plurality of possible connecting flight-dates, a plurality of possible points of sale, a plurality of possible points of commencement, or any combination thereof.

4. The method of any of claims 1 to 3, wherein the availability for the at least one requested flight-date is determined based at least in part on at least one other requested flight-date identified by the availability shopping request.

5. The method of any of claims 1 to 4, wherein the availability data for the at least one requested flight-date includes the availability information for a plurality of possible points of sale associated with the at least one requested flight-date.

6. The method of any of claims 1 to 5, wherein the availability data for the at least one requested flight-date includes the availability information for a plurality of possible points of commencement associated with the at least one requested flight-date.

7. The method of any of claims 1 to 6, wherein the availability data for the at least one requested flight-date includes the availability information for a plurality of possible connecting flight-dates associated with the at least one requested flight-date.

8. The method of any of claims 1 to 7, wherein generating the availability shopping reply that indicates the availability for the at least one requested flight-date comprises:
scoring the availability information for each of the plurality of possible flight contexts and the plurality of possible origin and destination pairs based at least in part on the flight context of the at least one requested flight-date and the origin and destination pair of the at least one travel solution,
wherein the availability is based at least in part on a highest scored availability information.

9. The method of any of claims 1 to 8, further comprising:
receiving an availability polling response from an inventory system of an airline that includes updated availability information for at least one particular flight-date of the plurality of plurality of flight-dates for which availability data is stored by the availability cache; and
storing the updated availability information for the at least one particular flight-date in the availability cache based at least in part on a segmentation associated with the updated availability information and at least one storage rule.

10. The method of claim 9, wherein storing the updated availability information for the at least one particular flight-date in the availability cache comprises:
storing the updated availability information for a first segmentation of the availability data of the at least one particular flight-date;
determining, with the at least one processor, whether the updated availability information corresponds to a second segmentation of the availability data of the particular flight-date based at least in part on a cache chain and the at least one storage rule; and
in response to determining that the updated availability information corresponds to the second segmentation of the availability data of the particular flight-date, storing the updated availability information in the second segmentation of the availability data of the particular flight-date.

11. A system comprising:
at least one processor;
an availability cache coupled with the at least one processor, the availability cache storing availability data for a plurality of flight-dates, and the availability data for each flight-date includes availability information that is segmented for a plurality of possible flight-date contexts and a plurality of possible origin and destination pairs; and
a memory coupled with the at least one processor, the memory storing program code configured to be executed by the at least one processor to cause the at least one processor to:
receive an availability shopping request that identifies at least one requested flight-date having a departure point, an arrival point, and a flight-date context, and the at least one requested flight-date being associated with at least one travel solution having an origin and destination pair,
determine availability data associated with the at least one requested flight-date by querying the availability cache based at least in part on the departure point and the arrival point of the at least one requested flight-date, the determined availability data including the availability information for the plurality of possible flight-date contexts and the plurality of possible origin and destination pairs associated with the at least one requested flight-date, and
generate an availability shopping reply that indicates an availability for the at least one requested flight-date based at least in part on the retrieved availability data, the flight-date context of the at least one requested flight-date, and the origin and destination pair of the at least one travel solution.

12. The system of claim 11, wherein the program code is configured to generate the availability shopping reply that indicates the availability for the at least one requested flight-date by:
scoring the availability information for each of the plurality of possible flight contexts and the plurality of possible origin and destination pairs associated with the requested flight-date based at least in part on the flight-date context of the at least one requested flight-date and the origin and destination pair of the at least one travel solution,
wherein the availability is based at least in part on a highest scored availability information.

13. The system of claim 11 or claim 12, wherein the program code is further configured to:
receive an availability polling response from an inventory system of an airline that includes updated availability information for at least one particular flight-date of the plurality of the flight-dates for which availability data is stored by the availability cache, and
store the updated availability information for the at least one particular flight-date in the availability cache based at least in part on a segmentation associated with the updated availability information and at least one storage rule.

14. The system of claim 13, wherein the program code is configured to store the updated availability information for the at least one particular flight-date in the availability cache by:
storing the updated availability information for a first segmentation of the availability data of the at least one particular flight-date in the availability cache;
determining, with the at least one processor, whether the updated availability information corresponds to a second segmentation of the availability data of the particular flight-date based at least in part on a cache chain and the at least one storage rule; and
in response to determining that the updated availability information corresponds to the second segmentation of the availability data of the particular flight-date, storing the updated availability information in the second segmentation of the availability data of the particular flight-date in the availability cache.

15. A computer program product comprising:
a computer readable storage medium; and
program code configured to be executed by at least one processor to cause the at least one processor to:
receive an availability shopping request that identifies at least one requested flight-date having a departure point, an arrival point, and a flight-date context, and the at least one requested flight-date being associated with at least one travel solution having an origin and destination pair,
determine availability data associated with the at least one requested flight-date based at least in part on the departure point and the arrival point of the at least one requested flight-date by querying an availability cache that stores availability data for a plurality of flight-dates, and the availability data for each flight-date includes availability information for a plurality of possible flight-date contexts and a plurality of possible origin and destination pairs, and
generate an availability shopping reply that indicates an availability for the at least one requested flight-date based at least in part on the retrieved availability data, the flight-date context of the at least one requested flight-date, and the origin and destination pair of the at least one travel solution.
